# EUROPÄISCHE PATENTSCHRIFT

(11) **EP 3 288 739 B1**
(45) Veröffentlichungstag und Bekanntmachung des Hinweises auf die Patenterteilung: **19.02.2020**
(21) Anmeldenummer: 16721669.6
(22) Anmeldetag: 19.04.2016
(51) Int. Cl.: B29B 15/12

(54) **VERFAHREN UND VORRICHTUNG ZUR HERSTELLUNG EINES FASERVERBUNDWERKSTOFFS**
METHOD AND DEVICE FOR PRODUCING A FIBROUS COMPOSITE COMPONENT
PROCÉDÉ ET DISPOSITIF DE PRODUCTION D'UN MATÉRIAU COMPOSITE EN FIBRES

(30) Priorität: 30.04.2015 EP 15165851
(43) Veröffentlichungstag der Anmeldung: 07.03.2018
(73) Patentinhaber: Evonik Operations GmbH, 45128 Essen (DE)
(72) Erfinder: BERLIN, Mark Reinhard, 73732 Esslingen (DE); SONDERMANN, Udo, 46286 Dorsten (DE)
(74) Vertreter: Evonik Patent Association
(86) Internationale Anmeldenummer: PCT/EP2016/058636
(87) Internationale Veröffentlichungsnummer: WO 2016/173886

(56) Entgegenhaltungen:
- EP-A1- 1 172 191
- WO-A1-2012/149129
- WO-A1-2014/140025
- WO-A1-2014/171016
- CN-B- 102 601 887
- DE-A1-102013 227 173
- US-A- 5 989 376
- US-B1- 6 270 851

## Beschreibung

Gegenstand der Erfindung sind ein Verfahren sowie eine Vorrichtung zur Herstellung von Verbundwerkstoffen, bei denen ein oder mehrere Faserbündel schonend aufgeweitet und danach mit einer Schmelze imprägniert werden können. Mit diesem Verfahren beziehungsweise dieser Vorrichtung können auch günstigere Fasertypen, beispielsweise aus E-Glas, bei minimalem Faserbruch optimal aufgeweitet werden.

Die Aufspreizung eines Faserbündels bei der Imprägnierung ist bekannt. Gängige Praxis der Faseraufweitung ist das Aufspreizen von Faserbündeln durch das vermehrte Umlenken über verschiedene Umlenkstangen. Je nach Stangenanzahl, Umlenkwinkel und Oberflächengüte können so gute Ergebnisse erzielt werden. Grundsätzlich wird eine hohe Faseraufweitung durch vermehrtes Umlenken erzielt. Dieses Vorgehen begünstigt allerdings den Bruch von Einzelfilamenten im Faserbündel, was den Weiterverarbeitungsprozess erschwert und den Verarbeitungsprozess destabilisiert. Geringere Umlenkungen hingegen spreizen Fasern nicht vollständig auf. So wird in der EP 0 056 703 A1 ein Verfahren beschrieben, bei dem Verstärkungsfaser-Rovings durch eine Schmelze eines thermoplastischen Kunststoffs gezogen werden, in die mindestens eine beheizte Oberfläche zum Spreizen des Rovings in Form einer beheizten Spreizstange eintaucht. Praktisch sind jedoch immer mehrere Spreizvorrichtungen erforderlich. Die aufzubringenden Abzugskräfte steigen aber mit der Zahl der Spreizvorrichtungen, mit der Viskosität der Schmelze und mit der Abzugsgeschwindigkeit stark an. Da die daraus resultierenden hohen Abzugskräfte sowie die mechanische Reibung an den Stangen die Verstärkungsfaser schädigen und damit die Eigenschaften des Verbundwerkstoffs verschlechtern, ist das zur Verfügung stehende Arbeitsfenster sehr klein. Es kommt hinzu, dass die Imprägniergüte und damit auch die Qualität der Produkte mit steigender Viskosität der Schmelze und steigender Abzugsgeschwindigkeit abnehmen. Daher führt das Verfahren der EP 0 056 703 A1 nur bei Schmelzeviskositäten bis zu 30 Pas und bei niedrigen Abzugsgeschwindigkeiten (unter 0,3 m/min) zu guten Ergebnissen.

Die EP 0 602 618 A1 zeigt eine andere Möglichkeit der feinen Faseraufweitung durch eine Luftdüse, welche die vorgespreizten Faserbündel verbreitert und homogenisiert. Nachteilig bei diesem Vorgehen ist die nicht kontrollierte Einzelfaseraufweitung, d.h. das gesamte Gelege wird mittels Druckluft aufgefächert. Verklebte Faserbündel können so nicht immer erfasst werden.

In der WO 92/21493 wird eine Möglichkeit der Faseraufweitung über vibrierende Stangen aufgezeigt. Diese Technologie wird vor allem für Kohlenstofffasern eingesetzt. Auch hier besteht die Gefahr von unkontrolliertem Faserbruch, der den Gesamtprozess destabilisiert.

Dokument EP 1 172 191 offenbart ein Verfahren zur Herstellung eines Faserverbundwerkstoffs aus unidirektionalen Fasern und einer Matrix, das folgende Schritte enthält:a) Ein Faserbündel wird radial über mindestens eine Umlenkstange geführt und auf diese Weise umgelenkt und aufgeweitet;b) das aufgeweitete Faserbündel wird anschließend in eine Imprägnierkammer eingezogen;c) auf das aufgeweitete Faserbündel wird eine Schmelze aufgetragen,d) das mit Schmelze imprägnierte Faserbündel wird durch eine Abzugsdüse am Werkzeugende gezogen.

Die Aufgabe der vorliegenden Erfindung besteht darin, die oben genannten Probleme zu lösen und insbesondere ein Verfahren und eine Vorrichtung zur Verfügung zu stellen, bei denen eine kontrollierte Aufweitung eines Faserbündels so vorgenommen wird, dass auch verklebte Faserbündel aufgespreizt werden, wobei nur geringe Abzugskräfte nötig sein sollen, um Faserbruch so weit wie möglich zu vermeiden.

Überraschend wurde gefunden, dass diese Aufgabe gelöst wird, indem das Faserbündel über speziell geformte Umlenkstangen mit gerundeten Erhebungen geführt und dabei aufgeweitet wird. Gegenstand der Erfindung ist daher ein Verfahren zur Herstellung eines Verbundwerkstoffs aus unidirektionalen Fasern und einer Matrix, das folgende Schritte enthält:
a) Ein Faserbündel wird radial über mindestens eine Umlenkstange geführt, die radial umlaufende gerundete Erhebungen aufweist, und auf diese Weise umgelenkt und aufgeweitet;
b) das aufgeweitete Faserbündel wird anschließend in eine Imprägnierkammer eingezogen;
c) auf das aufgeweitete Faserbündel wird eine Schmelze aufgetragen,
d) das mit Schmelze imprägnierte Faserbündel wird durch eine Abzugsdüse am Werkzeugende gezogen.

Das Produkt kann anschließend kalandriert und abgekühlt werden.

Der Verfahrensschritt a) ist so zu verstehen, dass auch mehrere Faserbündel über jeweils mindestens eine solche Umlenkstange geführt werden können, und dass die Faserbündel dann spätestens vor der Abzugsdüse zusammengeführt werden.

Unter "Faserbündel" ist ein Bündel aus einer größeren Zahl von Einzelfilamenten zu verstehen. Üblicherweise sind es mehrere tausend Einzelfilamente. Das Faserbündel kann aus einem Roving oder auch aus einer Mehrzahl an Rovings bestehen; vorzugsweise besteht es aus einem bis maximal 1000 Rovings und besonders bevorzugt aus einem bis maximal 800 Rovings. Diese Rovings werden beim erfindungsgemäßen Verfahren einzeln von Spulen abgewickelt oder abgezogen und vor der Spreizvorrichtung oder am Beginn der Spreizvorrichtung so zusammengeführt, dass sie ein einziges Faserbündel ergeben. Unter "Roving" versteht man hierbei generell ein Bündel von Einzelfilamenten; dieses Bündel kann aus einem einzelnen Fasertyp oder auch aus verschiedenen Fasertypen bestehen. Grundsätzlich sind alle Fasern von ausreichender Länge geeignet; es können anorganische Fasern, Polymerfasern sowie Naturfasern eingesetzt werden. Beispiele geeigneter Fasern sind Metallfasern, Glasfasern (z. B. aus E-Glas, A-Glas, C-Glas, D-Glas, AR-Glas, R-Glas, S1-Glas, S2-Glas usw.), Carbonfasern, metallisierte Carbonfasern, Borfasern, keramische Fasern (z. B. aus Al₂O₃ oder SiO₂), Basaltfasern, Siliciumcarbidfasern, Aramidfasern, Polyamidfasern, Polyethylenfasern, Polyesterfasern (z. B. aus Polybutylenterephthalat), Fasern aus flüssigkristallinem Polyester, Polyacrylnitrilfasern sowie Fasern aus Polyimid, Polyetherimid, Polyphenylensulfid, Polyetherketon, Polyetheretherketon, ferner Cellulosefasern, die mittels des Viskoseverfahrens ersponnen wurden und üblicherweise als Viskosefasern bezeichnet werden, Hanffasern, Flachsfasern, Jutefasern und dergleichen. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden.

Die Matrix des Verbundwerkstoffs kann eine thermoplastische Formmasse, ein Duroplast, ein Thermoplast-Duroplast-Hybridsystem, ein thermoplastisches Elastomer oder ein vernetztes Elastomer sein. Thermoplastische Formmassen bestehen aus einem Thermoplasten als Hauptbestandteil oder alleinigem Bestandteil. Weitere Bestandteile können beispielsweise Stabilisatoren, Verarbeitungshilfsmittel, Pigmente, Flammschutzmittel, andere Thermoplaste als Blendkomponenten, Schlagzähmodifier oder dergleichen sein. Geeignete Thermoplaste sind beispielsweise Polyolefine (wie Polyethylen oder Polypropylen), Polyester (wie Polyethylenterephthalat, Polybutylenterephthalat, Polyarylate oder flüssigkristalline Polyester), Polycarbonat, Polyestercarbonat, Polyamide (wie PA46, PA6, PA66, PA610, PA612, PA1010, PA11, PA12, teilaromatische Polyamide (PPA) oder transparente Polyamide beispielsweise auf Basis von linearen oder verzweigten aliphatischen, cycloaliphatischen oder aromatischen Dicarbonsäuren und Diaminen), Polyarylenetherketonen (wie Polyetheretherketon, Polyetherketon oder Polyetheretherketonketon), Polyphenylensulfid, Polyetherimid, Polymethylmethacrylat, Polystyrol, Styrol-Acrylnitril-Copolymere (SAN), Styrol-Acrylnitril-Butadien-Copolymere (ABS), Polyacetal, Polyurethan, Polyimid, Polysulfon, Polyethersulfon, Polyphenylenoxid oder Fluorpolymere (wie PVDF oder ETFE). Diese Schmelze kann auch ein Lösungsmittel enthalten, das anschließend wieder entfernt wird. Es kann aber auch stattdessen ein Monomer als Schmelze aufgebracht werden, das dann in situ polymerisiert wird; so kann beispielsweise eine Polyamidmatrix durch anionische Lactampolymerisation erzeugt werden. Eine weitere Variante besteht darin, dass ein Polymer mit vergleichsweise niedrigem Molekulargewicht zusammen mit einem Kopplungsmittel als Schmelze aufgebracht wird und dann während des Imprägniervorgangs und insbesondere danach eine Kettenverlängerung durchgeführt wird.

Geeignete Duroplaste sind beispielsweise ungesättigte Polyesterharze, Epoxidharze, Aminoplaste, Phenoplaste, vernetzte Polyacrylate, Polyurethane, Melaminharze, Vinylesterharze oder Bismaleinimidharze. Die im Verfahrensschritt b) aufgetragene Schmelze ist in diesem Fall ein harz-Härter-Gemisch oder eine sonstige geeignete Vorstufe, etwa ein Präpolymer.

Geeignete thermoplastische Elastomere sind beispielsweise TPE-O (thermoplastische Elastomere auf Olefinbasis, etwa PP/EPDM), TPE-V (vernetzte thermoplastische Elastomere auf Olefinbasis, insbesondere PP/vernetztes EPDM), TPE-U (thermoplastische Elastomere auf Polyurethanbasis), TPE-E (thermoplastische Polyesterelastomere), TPE-S (Styrolblockcopolymere, etwa SBS, SEBS, SEPS, SEEPS oder MBS) sowie TPE-A (Polyamidelastomere).

Geeignete vernetzte Elastomere werden aus einem Kautschukcompound erhalten, das dem Stand der Technik entsprechend ein Vulkanisationsmittel sowie gegebenenfalls Vulkanisationshilfsmittel, Füllstoffe, Öle sowie weitere übliche Zusätze enthält. Beispiele derartiger Elastomere sind EPDM, Styrol/Butadien-Kautschuk, Butylkautschuk, Silikonkautschuk, Epoxidkautschuk, Chloroprenkautschuk, Acrylkautschuk und dergleichen.

Im Rahmen der Erfindung wird der Begriff "Schmelze" für alle, beispielsweise obengenannten, fließfähigen Materialien verwendet, die auf die Faserbündel aufgebracht werden und dann die Matrix ergeben.

Die Aufweitung im Verfahrensschritt a) ist abhängig von der Geometrie des Endprodukts. Wenn das Endprodukt ein Tape ist, wird das Faserbündel um einen vergleichsweise hohen Faktor aufgeweitet. Wenn das Endprodukt dagegen relativ dick ist, beispielsweise einen rechteckigen oder quadratischen Querschnitt hat, kann das Faserbündel bezogen auf die Breite des Endprodukts erheblich weniger aufgeweitet werden, so dass keine sinnvolle allgemeingültige Obergrenze angegeben werden kann. Je nach Geometrie des Endprodukts kann eine Aufweitung vorzugsweise maximal um den Faktor 30, besonders bevorzugt maximal um den Faktor 20, insbesondere bevorzugt maximal um den Faktor 14 und ganz besonders bevorzugt maximal um den Faktor 8 erfolgen, jeweils bezogen auf die Breite des Endprodukts.

Hierbei ist es bevorzugt, dass das Faserbündel so weit aufgeweitet wird, dass seine mittlere Dicke dem 1- bis 50-fachen Filamentdurchmesser, besonders bevorzugt dem 1- bis 40-fachen Filamentdurchmesser, insbesondere bevorzugt dem 1,5- bis 35-fachen Filamentdurchmesser und ganz besonders bevorzugt dem 1,8- bis 30-fachen Filamentdurchmesser entspricht. Die Mittelung erfolgt hierbei über die Breite des Faserbündels hinweg. Bei Fasern mit nicht kreisförmigem Querschnitt wird als Filamentdurchmesser die kürzeste Querschnittsachse gewählt. Hinsichtlich des Faserquerschnitts kann den Angaben des Faserherstellers gefolgt werden. Bei Mischung verschiedener Fasern wird als Filamentdurchmesser das arithmetische Mittel bezogen auf die Zahl der Einzelfilamente gewählt. Wenn Herstellerangaben nicht verfügbar sind oder bei Fasern gleicher Art mit unterschiedlicher Geometrie, etwa Naturfasern, wird der mittlere Filamentdurchmesser durch eine rasterelektronenmikroskopische Aufnahme (REM-Aufnahme), Ausmessen und Berechnen des arithmetischen Mittels bezogen auf die Zahl der Einzelfilamente bestimmt.

Die Umlenkstange besitzt mindestens zwei, vorzugsweise mindestens drei und besonders bevorzugt mindestens vier radial umlaufende gerundete Erhebungen. Die Erhebungen sind auf der Umlenkstange nebeneinander angeordnet und haben im Regelfall den gleichen Abstand voneinander. In einer bevorzugten Ausführungsform sind die Erhebungen über die gesamte Breite der Umlenkstange angeordnet. In einer weiteren bevorzugten Ausführungsform sind die Erhebungen in dem Bereich der Umlenkstange angeordnet, über den das Faserbündel geführt wird. Der Abstand der Erhebungen voneinander kann je nach Art der Fasern und der Art und Menge der an den Fasern anhaftenden Schlichte sehr stark variieren.

Vorzugsweise sind hierbei zwei oder drei Umlenkstangen hintereinander angeordnet, wobei etwa beim Einsatz dickerer Faserbündel oder von Faserbündeln, die mit viel Schlichte beladen und dadurch verklebt sind, durchaus auch vier, fünf, sechs oder mehr Umlenkstangen hintereinander angeordnet sein können. Hierbei hat es sich als vorteilhaft erwiesen, wenn bei der ersten Umlenkstange die Erhebungen in kürzerem Abstand angeordnet sind, während bei den nächsten Umlenkstangen die Abstände weiter werden können. Die Erfindung schließt auch den Fall ein, dass beispielsweise die letzte Umlenkstange keine Erhebungen besitzt. Erfindungswesentlich ist nur, dass mindestens eine der Umlenkstangen die weiter unten näher beschriebenen Erhebungen aufweist.

An der Umlenkstange wird das Faserbündel um einen Winkel umgelenkt, der unter anderem abhängig ist von der Art der Fasern und der Art und Menge der an den Fasern anhaftenden Schlichte. Der Umlenkwinkel liegt im Bereich von 5° bis 120°, vorzugsweise im Bereich von 10° bis 110°, besonders bevorzugt im Bereich von 15° bis 100° und insbesondere bevorzugt im Bereich von 20° bis 90°. In der Regel ist die Umlenkung eher schwach; in vielen Fällen ist ein Umlenkwinkel von 30° ein passender Richtwert.

Das aufgeweitete Faserbündel wird anschließend in die Imprägnierkammer eingezogen. Anschließend wird auf das aufgeweitete Faserbündel die Schmelze aufgebracht. Dies kann beispielsweise dadurch erfolgen, dass das Faserbündel durch ein Schmelzebad gezogen wird. Vorzugsweise wird jedoch die Schmelze mittels Auftragsdüsen oder mit Hilfe eines oder mehrerer Verteilerbalken aufgebracht.

Beim erfindungsgemäßen Verfahren wird eine Schmelze aufgebracht, die vorzugsweise eine Viskosität von 10 mPas bis 400 Pas und besonders bevorzugt bis 300 Pas besitzt. Bei Monomeren oder bei Präpolymeren bzw. Harz-Härter-Systemen, die nach Härtung Duroplaste oder Thermoplast-Duroplast-Hybridsystemen ergeben, liegt die Viskosität dabei im unteren Bereich bis hinab zu 10 mPas oder noch tiefer. Bei einer Schmelze aus einer thermoplastischen Formmasse, einem thermoplastischen Elastomer oder einem Elastomercompound beträgt die Viskosität in der Regel mindestens 1 Pas. Unter Viskosität wird erfindungsgemäß die Ruhe-Scherviskosität bei der verfahrensgemäßen Temperatur verstanden, gemessen in einem mechanischen Spektrometer nach ASTM D4400.

Beim Aufbringen der Schmelze wird vorzugsweise ohne Schmelzeüberschuss, insbesondere bei höherviskosen Schmelzen, oder mit nur geringem Schmelzeüberschuss gearbeitet. Beim Arbeiten mit Schmelzeüberschuss muss Vorsorge getroffen werden, dass die überschüssige Schmelze durch eine dafür vorgesehene Öffnung abfließen kann. Das Verhältnis von Fasern zu Schmelze wird so eingestellt, dass der Volumenanteil der Fasern im Fertigteil etwa 10 bis 85 %, bevorzugt 15 bis 80 % und besonders bevorzugt 20 bis 75 % beträgt.

Im folgenden Imprägnierschritt dringt die aufgebrachte Schmelze in die Faserzwischenräume ein. Dies wird unterstützt durch lokale Differenzdrucke sowie durch Relativbewegungen der Fasern. Geeignete Maßnahmen hierfür sind beispielsweise eine Querschnittsverjüngung, eine Umlenkung um einen Radius und/oder die Formgebung vor und in der Abzugsdüse. Grundsätzlich kann hier jede aus dem Stand der Technik bekannte Maßnahme verwendet werden.

Die Abzugsdüse enthält in der Regel keine integrierte Abzugseinrichtung. Der Strang wird üblicherweise vielmehr durch einen direkt nach der Düse angebrachten Abzug oder durch Kalanderwalzen gezogen. Ein derartiger Abzug, beispielsweise in Form von Rollen oder Walzen, sowie Kalander sind Stand der Technik.

Die Abzugsgeschwindigkeit ist nach Bedarf einstellbar. Sie liegt vorzugsweise bei 0,1 bis 30 m/min und besonders bevorzugt bei 0,5 bis 25 m/min.

Beim erfindungsgemäßen Verfahren kann der erhaltene Strang jede gewünschte Geometrie besitzen. Er kann beispielsweise eine Folie, ein Tape, eine Platte, ein Rundprofil, ein Rechteckprofil oder ein komplexes Profil sein.

In einer Variante dieses Verfahrens wird der erhaltene Strang, der eine thermoplastische Matrix enthält, zu langfaserverstärktem Stäbchengranulat mit einer Länge von 4 bis 60 mm, vorzugsweise 5 bis 50 mm, besonders bevorzugt 6 bis 40 mm, insbesondere bevorzugt 5 bis 30 mm und ganz besonders bevorzugt 6 bis 25 mm geschnitten. Aus diesem Granulat können dann Formteile mittels Spritzgießen, Extrusion, Pressen oder anderer gebräuchlicher Formgebungsverfahren hergestellt werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass bevorzugt Schnecken mit großem Durchmesser und tiefem Kompressionsverhältnis sowie großzügig dimensionierte Düsen-und Angusskanäle zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden Formteile erhalten, die im Mittel eine höhere Faserlänge aufweisen als vergleichbare Formteile hergestellt aus kurzfaserverstärkten Formmassen. Hierdurch wird eine deutliche Verbesserung der Eigenschaften, insbesondere beim Zug-E-Modul, der Reißfestigkeit und der Kerbschlagzähigkeit erreicht.

In der Figur 1 ist eine erfindungsgemäße Umlenkstange wiedergegeben.

Die Figur 2 zeigt zwei nebeneinanderliegende Erhebungen im Detail.

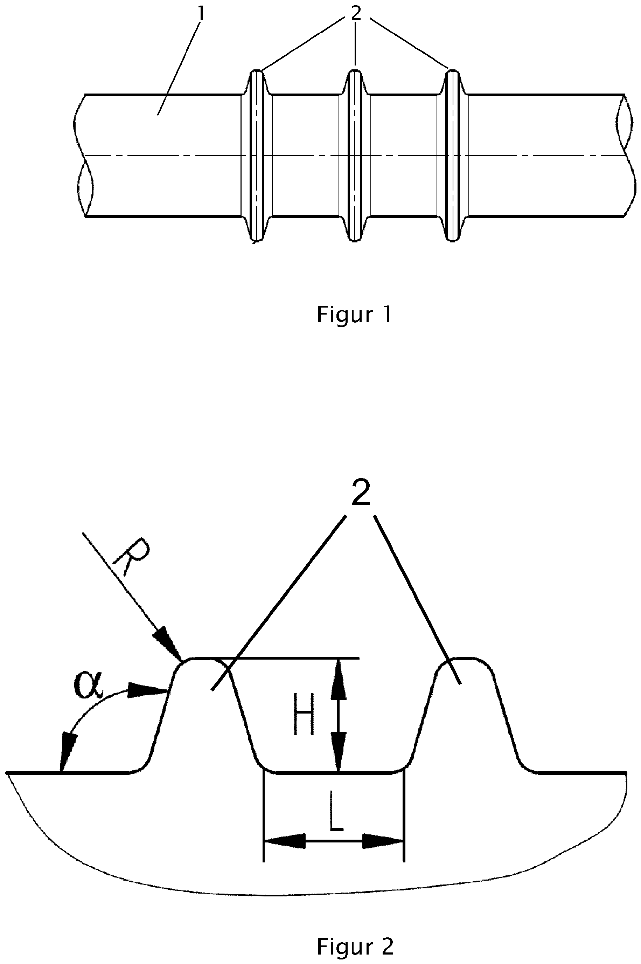

Die in der Figur 1 dargestellte Umlenkstange 1 besitzt drei radial umlaufende Erhebungen **2,** die in diesem Fall in dem Bereich der Umlenkstange angeordnet sind, über den das Faserbündel geführt würde.

In der Figur 2 sind zwei Erhebungen 2 näher illustriert. Die Erhebungen besitzen einen Flankenwinkel a, eine Höhe H sowie eine gerundete Spitze mit einem Radius R. Zwischen den Erhebungen befindet sich ein gerader Abschnitt der Länge L, der beispielsweise das 0,5-fache bis das sechsfache der Ursprungsrovingsbreite betragen kann. Vorzugsweise beträgt der Flankenwinkel α 90,1° bis 100°, besonders bevorzugt 90,3° bis 95° und insbesondere bevorzugt 90,5° bis 92°, während die Höhe H vorzugsweise 0,2 mm bis 20 mm, besonders bevorzugt 0,5 mm bis 10 mm, insbesondere bevorzugt 1 mm bis 6 mm und ganz besonders bevorzugt 2 mm bis 4 mm beträgt. Der Radius R beträgt vorzugsweise 0,1 mm bis 10 mm, besonders bevorzugt 0,1 mm bis 5 mm und insbesondere bevorzugt 0,2 bis 2 mm. Der Radius ist hierbei auf die Rundung der Spitze bezogen.

Eine besonders vorteilhafte Ausführungsform der Erfindung besteht darin, dass die erfindungsgemäße Umlenkstange in dem Verfahren eingesetzt wird, das in der europäischen Patentanmeldung mit dem Anmeldeaktenzeichen 14200411.8 vom 29.12.2014 beschrieben wird. Das Verfahren enthält hierbei folgende Schritte:
a) Ein Faserbündel wird radial über mindestens eine Umlenkstange geführt, die radial umlaufende gerundete Erhebungen aufweist, und dabei umgelenkt und mindestens um den Faktor 1,2, vorzugsweise mindestens um den Faktor 1,4 und besonders bevorzugt mindestens um den Faktor 1,6 stärker aufgeweitet als es der Breite des Endprodukts entspricht;
b) das aufgeweitete Faserbündel wird anschließend in eine Imprägnierkammer eingezogen;
c) im aufgeweiteten Zustand wird eine Schmelze mittels mindestens einer Auftragsdüse aufgetragen;
c') durch eine Querschnittsverjüngung führt das Werkzeug das benetzte Faserbündel in Richtung des späteren Produktquerschnitts, d. h. in Richtung des Querschnitts, mit dem das Produkt die Abzugsdüse verlässt;
c") ein Radius lenkt die benetzten Fasern um einen Winkel von 5 bis 60°, vorzugsweise von 8 bis 50°, besonders bevorzugt von 12 bis 40° und insbesondere bevorzugt von 15 bis 35° um;
c'") eine Beruhigungszone vergleichmäßigt die Faserverteilung auf eine einheitliche Höhe;
d) das mit Schmelze imprägnierte Faserbündel wird durch eine Abzugsdüse am Werkzeugende gezogen.

Die Querschnittsverjüngung im Verfahrensschritt c') führt dazu, dass die Aufspreizung des benetzten Faserbündels reduziert wird; das heißt, dass dessen Breite in Richtung der Breite der Abzugsdüse geführt wird. In der bevorzugten Ausführungsform wird die Breite des benetzten Faserbündels auf die Breite der Abzugsdüse geführt. In einer zweiten möglichen Ausführungsform wird die Breite des benetzten Faserbündels auf eine Breite geführt, die größer ist als die Breite der Abzugsdüse. In diesem Fall wird auf dem Weg zur Abzugsdüse oder in der Abzugsdüse die Breite des benetzten Faserbündels weiter reduziert. In einer dritten möglichen Ausführungsform wird die Breite des benetzten Faserbündels auf eine Breite geführt, die kleiner ist als die Breite der Abzugsdüse. In diesem Fall wird auf dem Weg zur Abzugsdüse die Breite des benetzten Faserbündels durch erneute Aufspreizung wieder erhöht. Die Querschnittsverjüngung im Verfahrensschritt c') wird vorzugsweise so durchgeführt, dass bei allen hier betrachteten Ausführungsformen die Breite des benetzten Faserbündels mindestens um den Faktor 1,2 und besonders bevorzugt mindestens um den Faktor 1,4 reduziert wird.

Im Verfahrensschritt c") beträgt der Radius der Umlenkung vorzugsweise 2 bis 90 mm, besonders bevorzugt 3 bis 60 mm, insbesondere bevorzugt 4 bis 40 mm und ganz bevorzugt 4 bis 30 mm. Variationen der Geometrie sind möglich; beispielsweise kann an der Umlenkstelle der Radius mit einer kurzen Erhebung kombiniert werden, oder das Faserbündel wird an der Umlenkstelle Z-förmig geführt. Diese Variationen der Geometrie lassen sich so beschreiben, dass direkt hintereinander eine zweifache Richtungsänderung erfolgt, wobei dazwischen ein Wendepunkt liegt. In diesem Fall gelten der anspruchsgemäße Radius und der anspruchsgemäße Winkel für die zweite Richtungsänderung und vorzugsweise auch für die erste Richtungsänderung. Hierbei können erster Radius und zweiter Radius sowie erster Winkel und zweiter Winkel unterschiedlich sein.

Die Umlenkstelle befindet sich vorzugsweise am Ende der Querschnittsverjüngung; sie kann aber auch vor dem Ende der Querschnittsverjüngung oder nach dem Ende der Querschnittsverjüngung liegen, allerdings ist dann damit zu rechnen, dass die Imprägnierqualität eventuell nicht das Optimum erreicht.

Wenn als Schmelze ein Harz-Härter-System, ein Monomer oder ein Präpolymer aufgetragen wird, findet die Aushärtereaktion hier üblicherweise vornehmlich in der Beruhigungszone statt. Der abgezogene Strang ist dann bereits im Wesentlichen ausgehärtet.

Die Länge der Beruhigungszone ist abhängig beispielweise von der Schmelzeviskosität, der vorgesehenen Abzugsgeschwindigkeit und der Anlagengröße. Beispielsweise werden bei einer Laboranlage, auf der ein Tape von 40 mm Breite aus E- oder S-Glas und PA12 hergestellt wird, sehr gute Ergebnisse bei einer Länge von 100 mm erhalten. Dies ist aber nur ein ungefährer Anhaltspunkt. Die Beruhigungszone kann auch kürzer oder auch deutlich länger sein.

Hinsichtlich weiterer Einzelheiten des Verfahrens, der Vorrichtung sowie der Vorteile sei auf die Offenbarung der europäischen Patentanmeldung mit dem Anmeldeaktenzeichen 14200411.8 vom 29.12.2014 sowie der daraus resultierenden Veröffentlichung verwiesen; diese Offenbarung soll in die vorliegende Patentanmeldung ausdrücklich einbezogen sein.

Eine weitere besonders vorteilhafte Ausführungsform der Erfindung besteht darin, dass die erfindungsgemäße Umlenkstange in dem Verfahren eingesetzt wird, das in der europäischen Patentanmeldung mit dem Anmeldeaktenzeichen 15162335.2 vom 02.04.2015 beschrieben wird. Das Verfahren enthält hierbei folgende Schritte:
a) Ein oder mehrere Faserbündel werden radial über eine oder mehrere Spreizvorrichtungen geführt, die jeweils mindestens eine Umlenkstange enthalten, die radial umlaufende gerundete Erhebungen aufweist, und auf diese Weise umgelenkt und aufgeweitet;
b) das oder die aufgeweiteten Faserbündel werden anschließend in eine Imprägnierkammer eingezogen, so dass mindestens zwei übereinander liegende, räumlich getrennte und aufgeweitete Faserbahnen resultieren;
c) auf die aufgeweiteten Faserbündel wird eine Schmelze aufgetragen, wobei über horizontal ausgerichtete Verteilerbalken, die jeweils zwischen zwei Faserbahnen angeordnet sind, Schmelze zugeführt wird;
c') die einzelnen Faserbahnen werden so zusammengeführt, dass sie übereinander liegen und einander kontaktieren;
d) die zusammengeführten und mit Schmelze imprägnierten Faserbahnen werden durch eine Abzugsdüse am Werkzeugende gezogen.

Das Faserbündel wird aufgeweitet und so geführt, dass spätestens beim Schmelzeauftrag mindestens zwei übereinanderliegende Bahnen resultieren. Die Bahnseparation kann im Werkzeug oder auch schon vor dem Werkzeug erfolgen.

In einer bevorzugten Ausführungsform werden mindestens zwei Faserbündel jeweils separat über eine Spreizvorrichtung aufgeweitet und durch separate Öffnungen in die Imprägnierkammer eingezogen. Damit erhält man direkt zwei räumlich getrennte Faserbahnen.

Zweckmäßigerweise sind die Faserbündel, die Spreizvorrichtungen und die Einzugsöffnungen hierbei übereinander angeordnet, so dass die Faserbahnen nicht umgelenkt werden müssen. In Sonderfällen können die Faserbündel, die Spreizvorrichtungen und die Einzugsöffnungen jedoch auch anders angeordnet sein, so dass die Faserbahnen in die passende Lage umgelenkt werden.

In einer weiteren bevorzugten Ausführungsform werden mindestens zwei Faserbündel jeweils separat über eine Spreizvorrichtung aufgeweitet und durch eine gemeinsame Öffnung in eine Imprägnierkammer eingezogen. Beim Eintreten in die Imprägnierkammer teilen sich die einzelnen Faserbahnen wieder auf. Die Teilung der vorher separierten Bahnen kann durch manuelles Einfädeln im geöffneten Werkzeug erfolgen. Von daher ist ein einfach zu öffnendes, mindestens zweigeteiltes Werkzeug zu bevorzugen.

In einer weiteren Ausführungsform wird ein Faserbündel über eine Spreizvorrichtung aufgeweitet und hierbei oder anschließend durch eine geeignete Vorrichtung in mehrere übereinander liegende, räumlich getrennte und gespreizte Faserbahnen separiert. Allerdings müssen die separierten Faserbahnen hierbei umgelenkt werden. Anschließend werden die Faserbahnen in eine Imprägnierkammer eingezogen. In einer Variante hiervon werden zwei oder mehr Faserbündel jeweils separat über eine Spreizvorrichtung aufgeweitet und hierbei oder anschließend durch eine geeignete Vorrichtung jeweils in mehrere übereinander liegende, räumlich getrennte und gespreizte Faserbahnen separiert, diese umgelenkt und anschließend in eine Imprägnierkammer eingezogen.

Selbstverständlich sind auch beliebige Kombinationen dieser verschiedenen Ausführungsformen möglich.

Der Benetzungsvorgang erfolgt nun zwischen den jeweiligen Faserbahnen, wo ein Verteilerquerschnitt den Schmelzeanteil einbringt. Abhängig von den später gewünschten Produkteigenschaften sowie den verwendeten Ausgangsmaterialien können ein oder mehrere Schmelzeverteiler angeordnet werden, die vorzugsweise übereinander angebracht sind. Ein Verteilerbalken wird von einem Extruder oder einer Schmelzepumpe, die einer Plastifiziereinheit nachgeschaltet ist, mit Schmelze versorgt und dosiert das Polymer gleichmäßig über den Bahnquerschnitt. Die gleichmäßige Dosierung erfolgt über den Innenquerschnitt der Auftragsdüse. Die Geometrie der Verteilerdüse sorgt für einen gleichmäßigen Auftrag der Schmelze, indem vorzugsweise über die gesamte Breite der Faserbahnen eine Düsenöffnung oder mehrere nebeneinander angebrachte Düsenöffnungen vorhanden sind. Hier kann ein Bügelverteiler angebracht sein, eine Quellflussverteilergeometrie oder ähnliche Formen, die eine gezielte Dosierung sowie einen gleichmäßigen Auftrag des Schmelzefilms ermöglichen. Solche Verteilerdüsen sind dem Fachmann bekannt. Eine geeignete Quellflussverteilergeometrie ist beispielsweise in der WO 2012/149129 näher beschrieben. Der Verteilerbalken kann beispielsweise einen runden, ovalen, elliptischen, rechteckigen oder rechteckig-gerundeten Querschnitt besitzen.

Im Rahmen der Erfindung kann zusätzlich weitere Schmelze durch eine oder zwei Auftragsdüsen aufgebracht werden, wobei entweder eine Auftragsdüse oberhalb der obersten Faserbahn, eine Auftragsdüse unterhalb der untersten Faserbahn oder jeweils eine Auftragsdüse oberhalb der obersten Faserbahn und unterhalb der untersten Faserbahn angeordnet ist.

Im folgenden Impägnierschritt werden die verschiedenen Bahnen zusammengeführt und durch eine Düse gezogen. Der Kammerbereich zwischen Schmelzeauftrag und Düse kann zur Unterstützung mit einem leichten Schmelzeüberschuss versehen sein. In diesem Bereich legen sich die Faserbahnen zusammen und die aufgebrachte Schmelze dringt in die noch nicht imprägnierten Faserzwischenräume ein. Unterstützt wird dieser Vorgang durch lokale Differenzdrücke, die durch die Zusammenführung im Düsenbereich entstehen können. Die Zusammenführung kann auch im Kammerbereich durch die Kammergeometrie oder durch einen eingebrachten Einsatz in Form einer Querschnittsverjüngung unterstützt werden. In diesem Fall werden die Fasern schon in einer Vorstufe mit Schmelze vorkonsolidiert, die Düse übernimmt dann die restliche Konsolidierung. Wenn das Endprodukt eine Folie ist, wird eher keine Querschnittsverjüngung benötigt; ist es ein Profil, wird der Querschnitt dagegen von einer aufgeweiteten Faserbahn zur Profilform reduziert.

Die Abzugsdüse übernimmt die erste Formgebung und bewirkt eine weitere Imprägnierung der Bahnware. Sie enthält in der Regel keine integrierte Abzugseinrichtung. Der Strang wird üblicherweise vielmehr durch einen direkt nach der Düse angebrachten Abzug oder durch Kalanderwalzen gezogen. Ein derartiger Abzug, beispielsweise in Form von Rollen oder Walzen, sowie Kalander sind Stand der Technik. Hierdurch kann eine weitere Formgebung erfolgen.

Wenn als Schmelze ein Harz-Härter-System, ein Monomer oder ein Präpolymer aufgetragen wird, findet die Aushärtereaktion im Düsenbereich sowie danach statt. Der Düsenbereich kann hierbei länger ausgeführt sein. Es wird entweder mit mengenmäßig passendem Schmelzeauftrag gearbeitet oder die Düse wirkt als Abstreifer und die Aushärtung erfolgt erst anschließend. Die Temperaturführung muss so gewählt werden, dass die Aushärtung erst ab dem Düsenbereich stattfinden kann. Zur Vervollständigung der Aushärtung wird das Produkt nach dem Abziehen von der Düse gegebenenfalls thermisch nachbehandelt, beispielsweise in einem Ofen.

Hinsichtlich weiterer Einzelheiten des Verfahrens, der Vorrichtung sowie der Vorteile sei auf die Offenbarung der europäischen Patentanmeldung mit dem Anmeldeaktenzeichen 15162335.2 vom 02.04.2015 sowie der daraus resultierenden Veröffentlichung verwiesen; diese Offenbarung soll in die vorliegende Patentanmeldung ausdrücklich einbezogen sein.

Gegenstand der Erfindung ist auch eine Vorrichtung zur Herstellung eines Faserverbundwerkstoffs, die folgende Elemente enthält:
a) Eine Spreizvorrichtung, die eine oder mehrere hintereinander angeordnete Umlenkstangen enthält, die radial umlaufende gerundete Erhebungen aufweisen, und über die ein Faserbündel radial geführt, umgelenkt und aufgeweitet werden kann;
b) einen oder mehrere Einzugsbereiche in eine Imprägnierkammer;
c) in Transportrichtung folgend eine Vorrichtung zum Auftragen von Schmelze auf das aufgeweitete Faserbündel,
d) eine anschließende Zone zur Imprägnierung des Faserbündels und
e) eine Abzugsdüse.

Details zu dieser Vorrichtung ergeben sich aus der obigen Verfahrensbeschreibung, da die Vorrichtung zur Durchführung des erfindungsgemäßen Verfahrens dient.

In einer besonders vorteilhaften Ausführungsform hiervon enthält die Vorrichtung folgende Elemente:
a) Eine Spreizvorrichtung, die eine oder mehrere hintereinander angeordnete Umlenkstangen enthält, die radial umlaufende gerundete Erhebungen aufweisen, und über die ein Faserbündel radial geführt, umgelenkt und mindestens um den Faktor 1,2, vorzugsweise mindestens um den Faktor 1,4 und besonders bevorzugt mindestens um den Faktor 1,6 stärker aufgeweitet werden kann als es der Breite des Endprodukts entspricht,
b) einen oder mehrere Einzugsbereiche in eine Imprägnierkammer;
c) in Transportrichtung folgend eine oder mehrere Auftragsdüsen, mit denen Schmelze auf das aufgeweitete Faserbündel aufgetragen werden kann,
d) eine anschließende Zone zur Imprägnierung des Faserbündels, die hintereinander folgende Bereiche enthält:
   - eine Querschnittsverjüngung des Transportkanals, mit der das benetzte Faserbündel in Richtung des späteren Produktquerschnitts geführt werden kann,
   - eine Umlenkstelle mit einer Umlenkung um 5 bis 60°, vorzugsweise von 8 bis 50°, besonders bevorzugt von 12 bis 40° und insbesondere bevorzugt von 15 bis 35° und
   - eine Beruhigungszone, sowie
e) eine Abzugsdüse.

Details zu dieser Ausführungsform ergeben sich aus der obigen Verfahrensbeschreibung, aus der Offenbarung der europäischen Patentanmeldung mit dem Anmeldeaktenzeichen 14200411.8 vom 29.12.2014 sowie der daraus resultierenden Veröffentlichung.

In einer weiteren besonders vorteilhaften Ausführungsform enthält die Vorrichtung folgende Elemente:
a) Eine Spreizvorrichtung, die eine oder mehrere hintereinander angeordnete Umlenkstangen enthält, die radial umlaufende gerundete Erhebungen aufweisen, und über die ein Faserbündel radial geführt, umgelenkt und so aufgeweitet werden kann, dass mindestens zwei übereinander liegende, räumlich geteilte Faserbahnen vorliegen;
b) einen oder mehrere Einzugsbereiche in eine Imprägnierkammer;
c) in Transportrichtung folgend eine Vorrichtung zum Auftragen von Schmelze auf das aufgeweitete Faserbündel in Form eines horizontal ausgerichteten Verteilerbalkens, der so angeordnet ist, dass er sich zwischen zwei Faserbahnen befindet und mit dessen Hilfe Schmelze aufgetragen werden kann;
d) eine anschließende Zone zur Imprägnierung des Faserbündels, die einen Zusammenführungsbereich enthält, und
e) eine Abzugsdüse.

Details zu dieser Ausführungsform ergeben sich aus der obigen Verfahrensbeschreibung, aus der Offenbarung der europäischen Patentanmeldung mit dem Anmeldeaktenzeichen 15162335.2 vom 02.04.2015 sowie der daraus resultierenden Veröffentlichung.

Mit Hilfe der erfindungsgemäßen Umlenkstange wird eine gleichmäßige Aufweitung sogar von stark schlichtehaltigen Faserbündeln erzielt, wobei insbesondere auch verklebte Bereiche aufgebrochen werden. Damit wird die Voraussetzung dafür geschaffen, dass eine sehr gute Imprägnierqualität über einen sehr weiten Viskositätsbereich hinweg erzielt wird, auch bei hoher Abzugsgeschwindigkeit. Dies gilt erst recht im Zusammenwirken mit den Maßnahmen beim Schmelzeauftrag und der anschließenden Konsolidierung, die ein Fachmann wählen würde, um eine möglichst gute Faserbenetzung zu erzielen.

## Patentansprüche

1. Verfahren zur Herstellung eines Faserverbundwerkstoffs aus unidirektionalen Fasern und einer Matrix, das folgende Schritte enthält:
a) Ein Faserbündel wird radial über mindestens eine Umlenkstange (1) geführt, die radial umlaufende gerundete Erhebungen (2) aufweist, und auf diese Weise umgelenkt und aufgeweitet;
b) das aufgeweitete Faserbündel wird anschließend in eine Imprägnierkammer eingezogen;
c) auf das aufgeweitete Faserbündel wird eine Schmelze aufgetragen,
d) das mit Schmelze imprägnierte Faserbündel wird durch eine Abzugsdüse am Werkzeugende gezogen.

2. Verfahren gemäß Anspruch 1, **dadurch gekennzeichnet, dass** die Matrix des Verbundwerkstoffs eine thermoplastische Formmasse, ein Duroplast, ein Thermoplast-Duroplast-Hybridsystem, ein thermoplastisches Elastomer oder ein vernetztes Elastomer ist.

3. Verfahren gemäß einem der vorhergehenden Ansprüche, **dadurch gekennzeichnet, dass** im Schritt a) das Faserbündel so weit aufgespreizt wird, dass seine mittlere Dicke dem 1- bis 50-fachen Filamentdurchmesser entspricht.

4. Verfahren gemäß einem der vorhergehenden Ansprüche, **dadurch gekennzeichnet, dass** der erhaltene Strang nach Verlassen der Abzugsdüse kalandriert wird.

5. Verfahren gemäß einem der vorhergehenden Ansprüche, **dadurch gekennzeichnet, dass** der erhaltene Strang zu langfaserverstärktem Stäbchengranulat mit einer Länge von 4 bis 60 mm geschnitten wird.

6. Verfahren gemäß einem der Ansprüche 1 bis 4, **dadurch gekennzeichnet, dass** der erhaltene Strang eine Folie, ein Tape, eine Platte, ein Rundprofil, ein Rechteckprofil oder ein komplexes Profil ist.

7. Verfahren gemäß einem der vorhergehenden Ansprüche, **dadurch gekennzeichnet, dass**
- im Schritt a) das Faserbündel mindestens um den Faktor 1,2 stärker aufgeweitet wird als es der Breite des Endprodukts entspricht;
- im Schritt c) die Schmelze mittels mindestens einer Auftragsdüse aufgetragen wird;
- in einem Schritt c') das benetzte Faserbündel durch eine Querschnittsverjüngung in Richtung des späteren Produktquerschnitts geführt wird;
- in einem Schritt c") ein Radius die benetzten Fasern um einen Winkel von 5° bis 60° umlenkt und
- in einem Schritt c"') die Faserverteilung in einer Beruhigungszone auf eine einheitliche Höhe vergleichmäßigt wird.

8. Verfahren gemäß einem der Ansprüche 1 bis 6, **dadurch gekennzeichnet, dass**
- im Schritt a) eines oder mehrere Faserbündel über eine oder mehrere Spreizvorrichtungen aufgeweitet werden, die jeweils mindestens eine Umlenkstange (1) enthalten, welche radial umlaufende gerundete Erhebungen (2) aufweist;
- im Schritt b) das oder die aufgeweiteten Faserbündel anschließend in eine Imprägnierkammer eingezogen werden, so dass mindestens zwei übereinander liegende, räumlich getrennte und aufgeweitete Faserbahnen resultieren;
- im Schritt c) die Schmelze über horizontal ausgerichtete Verteilerbalken, die jeweils zwischen zwei Faserbahnen angeordnet sind, zugeführt wird;
- in einem Schritt c') die einzelnen Faserbahnen so zusammengeführt werden, dass sie übereinander liegen und einander kontaktieren.

9. Vorrichtung zur Herstellung eines Faserverbundwerkstoffs, die folgende Elemente enthält:
a) Eine Spreizvorrichtung, die eine oder mehrere hintereinander angeordnete Umlenkstangen (1) enthält, die radial umlaufende gerundete Erhebungen (2) aufweisen, und über die ein Faserbündel radial geführt, umgelenkt und aufgeweitet werden kann;
b) einen oder mehrere Einzugsbereiche in eine Imprägnierkammer;
c) in Transportrichtung folgend eine Vorrichtung zum Auftragen von Schmelze auf das aufgeweitete Faserbündel,
d) eine anschließende Zone zur Imprägnierung des Faserbündels und
e) eine Abzugsdüse.

10. Vorrichtung gemäß Anspruch 9, **dadurch gekennzeichnet, dass**
- mit dem Element a) ein Faserbündel mindestens um den Faktor 1,2 stärker aufgeweitet werden kann als es der Breite des Endprodukts entspricht;
- beim Element c) die Vorrichtung zum Auftragen der Schmelze durch eine oder mehrere Auftragsdüsen ausgestaltet ist und
- das Element d) hintereinander folgende Bereiche enthält:
• eine Querschnittsverjüngung des Transportkanals, mit der das benetzte Faserbündel in Richtung des späteren Produktquerschnitts geführt werden kann,
• eine Umlenkstelle mit einer Umlenkung um 5 bis 60° und
• eine Beruhigungszone.

11. Vorrichtung gemäß Anspruch 9, **dadurch gekennzeichnet, dass**
- mit dem Element a) ein Faserbündel so aufgeweitet werden kann, dass mindestens zwei übereinander liegende, räumlich geteilte Faserbahnen vorliegen;
- beim Element c) die Vorrichtung zum Auftragen der Schmelze in Form eines horizontal ausgerichteten Verteilerbalkens ausgebildet ist, der so angeordnet ist, dass er sich zwischen zwei Faserbahnen befindet und
- das Element d) einen Zusammenführungsbereich enthält.

12. Verfahren gemäß einem der Ansprüche 1 bis 8 beziehungsweise Vorrichtung gemäß einem der Ansprüche 9 bis 11, **dadurch gekennzeichnet, dass** der Flankenwinkel (α) der radial umlaufenden gerundeten Erhebung 90,1° bis 100° beträgt.

13. Verfahren gemäß einem der Ansprüche 1 bis 8 sowie 12 beziehungsweise Vorrichtung gemäß einem der Ansprüche 9 bis 12, **dadurch gekennzeichnet, dass** die Höhe (H) der radial umlaufenden gerundeten Erhebung 0,2 mm bis 20 mm beträgt.

14. Verfahren gemäß einem der Ansprüche 1 bis 8 sowie 12 bis 13 beziehungsweise Vorrichtung gemäß einem der Ansprüche 9 bis 13, **dadurch gekennzeichnet, dass** der Radius (R) der radial umlaufenden gerundeten Erhebung, bezogen auf die Rundung der Spitze, 0,1 mm bis 10 mm beträgt.

## Claims

1. Process for the production of a fibre-composite material from unidirectional fibres and a matrix which comprises the following steps:
a) a fibre bundle is conducted radially over at least one deflection bar (1) having radially circumferential rounded elevations (2), thus being deflected and expanded;
b) the expanded fibre bundle is subsequently drawn into an impregnation chamber;
c) a melt is applied to the expanded fibre bundle,
d) the fibre bundle impregnated with melt is drawn through a take-off die at the end of the apparatus.

2. Process according to Claim 1, **characterized in that** the matrix of the composite material is a thermoplastic moulding composition, a thermoset, a thermoplastic-thermoset hybrid system, a thermoplastic elastomer or a crosslinked elastomer.

3. Process according to any of the preceding claims, **characterized in that** in the step a) the fibre bundle is spread to an extent such that its average thickness is from 1 to 50 times the filament diameter.

4. Process according to any of the preceding claims, **characterized in that** the obtained strand is calendered after leaving the take-off die.

5. Process according to any of the preceding claims, **characterized in that** the strand obtained is chopped to give long-fibre-reinforced pellets of 4 to 60 mm in length.

6. Process according to any of Claims 1 to 4, **characterized in that** the strand obtained is a thin sheet or other sheet, a tape, a round profile, a rectangular profile or a complex profile.

7. Process according to any of the preceding claims, **characterized in that**
- in step a) the fibre bundle is expanded to a width greater than the width of the end product at least by a factor of 1.2;
- in step c) the melt is applied by means of at least one applicator die;
- in a step c') the wetted fibre bundle is brought towards the later product cross section by virtue of a cross-sectional narrowing;
- in a step c") a radius deflects the wetted fibres by an angle of 5° to 60° and
- in a step c"') the fibre distribution is uniformized to a consistent height in a relaxation zone.

8. Process according to any of Claims 1 to 6, **characterized in that**
- in step a) one or more fibre bundles are expanded via one or more spreader devices each comprising at least one deflection bar (1) having radially circumferential rounded elevations (2);
- in step b) the one or more expanded fibre bundle(s) are then drawn into an impregnation chamber in such a way as to give at least two superposed, spatially separate and expanded fibre webs;
- in step c) the melt is supplied via horizontal distributor bars which are each arranged between two fibre webs;
- in a step c') the individual fibre webs are caused to converge in such a way that they are superposed and contact one another.

9. Device for the production of a fibre-composite material which comprises the following elements:
a) a spreader device comprising one or more successive deflection bars (1) which have radially circumferential rounded elevations (2) and over which a fibre bundle may be radially conducted, deflected and expanded;
b) one or more intake regions into an impregnation chamber;
c) a downstream device for application of melt to the expanded fibre bundle,
d) a subsequent zone for impregnation of the fibre bundle and
e) a take-off die.

10. Device according to Claim 9, **characterized in that**
- with element a) a fibre bundle can be expanded to a width greater than the width of the end product at least by a factor of 1.2;
- for element c) the device for application of the melt is in the form of one or more applicator dies and
- element d) comprises the following successive regions:
• a cross-sectional narrowing of the transport channel, with which the wetted fibre bundle may be brought towards the later product cross section,
• a deflection point providing deflection of 5° to 60° and
• a relaxation zone.

11. Device according to Claim 9, **characterized in that**
- with element a) a fibre bundle can be expanded in such a way as to give at least two superposed, spatially separate fibre webs;
- for element c) the device for application of the melt is in the form of a horizontal distributor bar which is arranged such that it is located between two fibre webs and
- element d) comprises a convergence region.

12. Process according to any of Claims 1 to 8/device according to any of Claims 9 to 11, **characterized in that** the flank angle (α) of the radially circumferential rounded elevation is 90.1° to 100°.

13. Process according to any of Claims 1 to 8 and 12/device according to any of Claims 9 to 12, **characterized in that** the height (H) of the radially circumferential rounded elevation is 0.2 mm to 20 mm.

14. Process according to any of Claims 1 to 8 and 12 to 13/device according to any of Claims 9 to 13, **characterized in that** the radius (R) of the radially circumferential rounded elevation based on the rounding of the tip is 0.1 mm to 10 mm.

## Revendications

1. Procédé de fabrication d'un matériau composite fibreux constitué par des fibres unidirectionnelles et une matrice, qui contient les étapes suivantes :
a) un faisceau de fibres est acheminé radialement sur au moins une tige de déviation (1), qui comprend des élévations arrondies (2) qui s'étendent radialement, et ainsi dévié et élargi ;
b) le faisceau de fibres élargi est ensuite introduit dans une chambre d'imprégnation ;
c) une masse fondue est appliquée sur le faisceau de fibres élargi,
d) le faisceau de fibres imprégné avec la masse fondue est soutiré par une buse de sortie à l'extrémité de l'outil.

2. Procédé selon la revendication 1, **caractérisé en ce que** la matrice du matériau composite est un matériau de moulage thermoplastique, un duroplastique, un système hybride thermoplastique-duroplastique, un élastomère thermoplastique ou un élastomère réticulé.

3. Procédé selon l'une quelconque des revendications précédentes, **caractérisé en ce qu'**à l'étape a), le faisceau de fibres est étalé de telle sorte que son épaisseur moyenne corresponde à 1 à 50 fois le diamètre filamentaire.

4. Procédé selon l'une quelconque des revendications précédentes, **caractérisé en ce que** le boudin obtenu est calandré après avoir quitté la buse de sortie.

5. Procédé selon l'une quelconque des revendications précédentes, **caractérisé en ce que** le boudin obtenu est découpé en un granulat de bâtonnets renforcé par des fibres longues d'une longueur de 4 à 60 mm.

6. Procédé selon l'une quelconque des revendications 1 à 4, **caractérisé en ce que** le boudin obtenu est un film, une bande, une plaque, un profilé rond, un profilé rectangulaire ou un profilé complexe.

7. Procédé selon l'une quelconque des revendications précédentes, **caractérisé en ce que**
- à l'étape a), le faisceau de fibres est élargi au moins 1,2 fois plus que la largeur du produit final ;
- à l'étape c), la masse fondue est appliquée au moyen d'au moins une buse d'application ;
- lors d'une étape c'), le faisceau de fibres mouillé est acheminé au travers d'un rétrécissement de la section transversale dans la direction de la section transversale de produit ultérieure ;
- lors d'une étape c"), un rayon des fibres mouillées est dévié d'un angle de 5° à 60°; et
- lors d'une étape c"'), la distribution des fibres dans une zone de repos est égalisée à une hauteur uniforme.

8. Procédé selon l'une quelconque des revendications 1 à 6, **caractérisé en ce que**
- à l'étape a), un ou plusieurs faisceaux de fibres sont élargis par un ou plusieurs dispositifs d'étalement, qui contiennent chacun au moins une tige de déviation (1), qui présente des élévations arrondies (2) qui s'étendent radialement ;
- à l'étape b), le ou les faisceaux de fibres élargis sont ensuite introduits dans une chambre d'imprégnation, de manière à obtenir au moins deux bandes de fibres superposées, séparées dans l'espace et élargies ;
- à l'étape c), la masse fondue est introduite par des rampes de distribution orientées à l'horizontale, qui sont agencées à chaque fois entre deux bandes de fibres ;
- lors d'une étape c'), les bandes de fibres individuelles sont rassemblées de telle sorte qu'elles soient superposées et rentrent en contact les unes avec les autres.

9. Dispositif pour la fabrication d'un matériau composite fibreux, qui contient les éléments suivants :
a) un dispositif d'étalement, qui contient une ou plusieurs tiges de déviation (1) agencées les unes après les autres, qui présentent des élévations arrondies (2) qui s'étendent radialement, et sur duquel un faisceau de fibres peut être acheminé radialement, dévié et élargi ;
b) une ou plusieurs zones d'introduction dans une chambre d'imprégnation ;
c) en aval dans la direction du transport, un dispositif pour l'application d'une masse fondue sur le faisceau de fibres élargi,
d) une zone ultérieure pour l'imprégnation du faisceau de fibres, et
e) une buse de soutirage.

10. Dispositif selon la revendication 9, **caractérisé en ce que**
- avec l'élément a), un faisceau de fibres peut être élargi au moins 1,2 fois plus que la largeur du produit final ;
- dans l'élément c), le dispositif d'application de la masse fondue est configuré par une ou plusieurs buses d'application, et
- l'élément d) contient les zones successives suivantes :
- un rétrécissement de la section transversale du canal de transport, avec lequel le faisceau de fibres mouillé peut être acheminé dans la direction de la section transversale de produit ultérieure,
- un point de déviation avec une déviation de 5 à 60°; et
- une zone de repos.

11. Dispositif selon la revendication 9, **caractérisé en ce que**
- avec l'élément a), un faisceau de fibres peut être élargi de telle sorte qu'au moins deux bandes de fibres superposées, séparées dans l'espace, soient présentes ;
- dans l'élément c), le dispositif pour l'application de la masse fondue est configuré sous la forme d'une rampe de distribution orientée à l'horizontale, qui est agencée de manière à se trouver entre deux bandes de fibres ; et
- l'élément d) contient une zone de rassemblement.

12. Procédé selon l'une quelconque des revendications 1 à 8 ou dispositif selon l'une quelconque des revendications 9 à 11, **caractérisé en ce que** l'angle de flanc (α) de l'élévation arrondie qui s'étend radialement est de 90,1° à 100°.

13. Procédé selon l'une quelconque des revendications 1 à 8 et 12 ou dispositif selon l'une quelconque des revendications 9 à 12, **caractérisé en ce que** la hauteur (H) de l'élévation arrondie qui s'étend radialement est de 0,2 mm à 20 mm.

14. Procédé selon l'une quelconque des revendications 1 à 8 et 12 à 13 ou dispositif selon l'une quelconque des revendications 9 à 13, **caractérisé en ce que** le rayon (R) de l'élévation arrondie qui s'étend radialement, par rapport à la courbure de la pointe, est de 0,1 mm à 10 mm.
